# EUROPEAN PATENT APPLICATION

(11) **EP 4 258 438 A1**
(43) Date of publication of application: **11.10.2023**
(21) Application number: 22778351.1
(22) Date of filing: 27.01.2022
(51) Int. Cl.: H01M 50/204, H01M 50/247

(54) **BATTERY AND ELECTRONIC DEVICE USING SAME**

(30) Priority: 30.03.2021 CN 202110339414
(71) Applicant: BYD Company Limited, Guangdong 518118 (CN)
(72) Inventor: WANG, Feng, Shenzhen, Guangdong Province Guangdong 518118 (CN); HUANG, Liangliang, Shenzhen, Guangdong Province Guangdong 518118 (CN); WANG, Jingguo, Shenzhen, Guangdong Province Guangdong 518118 (CN); ZHU, Shuang, Shenzhen, Guangdong Province Guangdong 518118 (CN); LEI, Yudong, Shenzhen, Guangdong Province Guangdong 518118 (CN)
(74) Representative: DehnsGermany Partnerschaft von Patentanwälten
(86) International application number: PCT/CN2022/074405
(87) International publication number: WO 2022/206163

(57) **Abstract**

The present disclosure discloses a battery and an electronic device using same. The battery includes a housing, multiple electrode cores, and a connection circuit. The multiple electrode cores each have predetermined overall dimensions and are arranged based on predetermined positions. At least two of the electrode cores have different heights. Multiple accommodating grooves are formed inside a predetermined position of the housing, which correspond to the multiple electrode cores. The connection circuit is accommodated in the housing and laid based on a predetermined serial/parallel relationship of the multiple electrode cores and positions of a lead-out portions of the electrode cores to electrically connect the multiple electrode cores. An output terminal of the connection circuit extends out of the housing for leading out power, thereby providing a battery structure, so as to increase a space utilization rate inside the electronic device and help realize lightness and thinness of the electronic device.

## Description

The present disclosure claims priority to Chinese Patent Application No. 202110339414.7, filed on March 30, 2021 and entitled "BATTERY AND ELECTRONIC DEVICE USING SAME". The entire content of the above-referenced application is incorporated herein by reference.

### FIELD

The present disclosure relates to the field of batteries, and more specifically, to a battery and an electronic device using same.

### BACKGROUND

Electronic devices, such as laptops, tablets, and mobile phones, are increasingly designed to be light and thin due to aesthetic and portability requirements. Generally, an overall dimension and an arrangement of a functional component inside the electronic device vary, but a battery, as a key component, is substantially mounted in the same manner. That is to say, a separate battery compartment needs to be arranged in advance for the battery, and the battery and battery compartment are basically regular shapes. In order to avoid other functional components, use of part of the space needs to be given up, which is not conducive to the lightness and thinness of the electronic device, so there is room for improvement.

### SUMMARY

Based on the above, the present disclosure discloses a battery and an electronic device using same, which is intended to provide a battery structure that can improve a space utilization rate inside the electronic device and help realize lightness and thinness of the electronic device.

The solutions are as follows.

A battery, including:
multiple electrode cores, where the electrode cores each have a predetermined overall dimension and are arranged based on predetermined positions, and at least two of the electrode cores have different heights; the predetermined position of the electrode core is provided with a lead-out portion;
a housing, where a predetermined position of the housing protrudes outward and multiple accommodating grooves are correspondingly formed inside, and the multiple accommodating grooves match the overall dimensions of the multiple electrode cores to correspondingly accommodate the multiple electrode cores; and
a connection circuit, accommodated in the housing and laid based on a predetermined serial/parallel relationship of the multiple electrode cores and a position of the lead-out portion to electrically connect the multiple electrode cores, where the connection circuit includes an output terminal, and the output terminal extends out of the housing for leading out power.

In a preferred implementation, the connection circuit further includes:
a wire portion, laid on a circumferential side of the electrode core based on the predetermined serial/parallel relationship of the multiple electrode cores and the position of the lead-out portion; and
multiple connecting portions, arranged on the wire portion and electrically connected with the lead-out portion at a corresponding position.

The output terminal is arranged on the wire portion.

In a preferred implementation, the wire portion includes multiple wire sections predetermined based on the predetermined serial/parallel relationship and the position of the lead-out portion.

At least one of the connecting portion and the output terminal is integrally preformed with one of the wire sections.

In a preferred implementation, a spacing is defined between adjacent electrode cores; and a part of the wire portion located between adjacent electrode cores is embedded in a corresponding spacing.

In a preferred implementation, the housing includes:
a first packaging film, substantially located in a same plane; and
a second packaging film, where a predetermined position of the second packaging film is recessed away from the first packaging film to form the multiple accommodating grooves.

In a preferred implementation, the lead-out portion of the electrode core and the connection circuit are arranged close to the first packaging film.

In a preferred implementation, circumferential sides of the first packaging film and the second packaging film are respectively provided with an edge sealing portion; an outer side of the output terminal is covered with a sealant layer.

The circumferential sides of the first packaging film and the second packaging film are sealed and connected through the edge sealing portions, the output terminal extends out of the housing from the two edge sealing portions, and the output terminal is hermetically connected with a corresponding position of the edge sealing portion through the sealant layer.

In a preferred implementation, an outer side of the wire portion is covered with an insulating film.

In a preferred implementation, at least two of the multiple electrode cores have different widths and/or have different lengths.

The widths and the lengths are respectively dimensions of the electrode cores in two directions perpendicular to a height direction.

The present disclosure further discloses an electronic device, including:
an enclosure, having accommodating space formed therein; and
multiple functional devices, mounted to the enclosure and occupying a part of the accommodating space.

The electronic device further includes the battery.

The battery substantially occupies the rest of the accommodating space.

Among the battery and electronic device, the multiple electrode cores of the battery have predetermined overall dimensions and are arranged in predetermined positions, which can be adapted to the arrangement of the functional device of the electronic device. At least two electrode cores have different heights, and the electrode cores can be arranged in a mutual avoidance relationship with the multiple functional devices. That is to say, when the battery is placed in the accommodating space, the functional device of the electronic device occupies a part of the accommodating space. For the battery, the overall dimension and the position arrangement of the electrode core is preset according to the arrangement of the functional device, and the electrode core is set to a height that matches the corresponding position of the functional device. As a result, the battery substantially occupies the rest of the accommodating space, and realizes the full utilization of the accommodating space. Meanwhile, the connection circuit is accommodated in the housing and laid based on a predetermined serial/parallel relationship of the multiple electrode cores and a position of the lead-out portion to electrically connect the multiple electrode cores. Wires are arranged in the housing of the battery, and the predetermined serial/parallel connection of the electrode core is realized. The output terminal extends out of the housing for electrical lead-out, which can simplify an external circuit and reduce occupation of an internal space of the electronic device by an external circuit and a component.

### BRIEF DESCRIPTION OF THE DRAWINGS

The above-mentioned and other objects and advantages of the present disclosure are described in detail below in conjunction with the accompanying drawings.
FIG. 1 is a schematic exploded structural view of an electronic device according to a preferred embodiment.
FIG. 2 is a schematic structural diagram of a battery in the electronic device shown in FIG. 1.
FIG. 3 is an exploded view of the battery shown in FIG. 2.
FIG. 4 is a schematic diagram of distribution of an electrode core in the battery shown in FIG. 2.
FIG. 5 is a schematic diagram of distribution of a connection circuit in the battery shown in FIG. 2.
FIG. 6 is a schematic diagram of connection between an electrode core and a connection circuit in the battery shown in FIG. 2.

### REFERENCE NUMERALS

10. Enclosure
20. Battery
30. Functional device
100. Electronic device
110. Accommodating space
210. Housing
220. Electrode core
230. connection circuit
240. Insulating film
2101. Accommodating groove
2110. First packaging film
2120. Second packaging film
2201. Lead-out portion
2210. First electrode core
2220. Second electrode core
2230. Third electrode core
2240. Fourth electrode core
2250. Fifth electrode core
2301. Wire portion
2302. Connecting portion
2303. Output terminal;
2310. First wire section
2320. Second wire section
2330. Third wire section
2340. Fourth wire section

### DETAILED DESCRIPTION

The embodiments of the present invention are described in detail below, and the embodiments described with reference to accompanying drawings are exemplary.

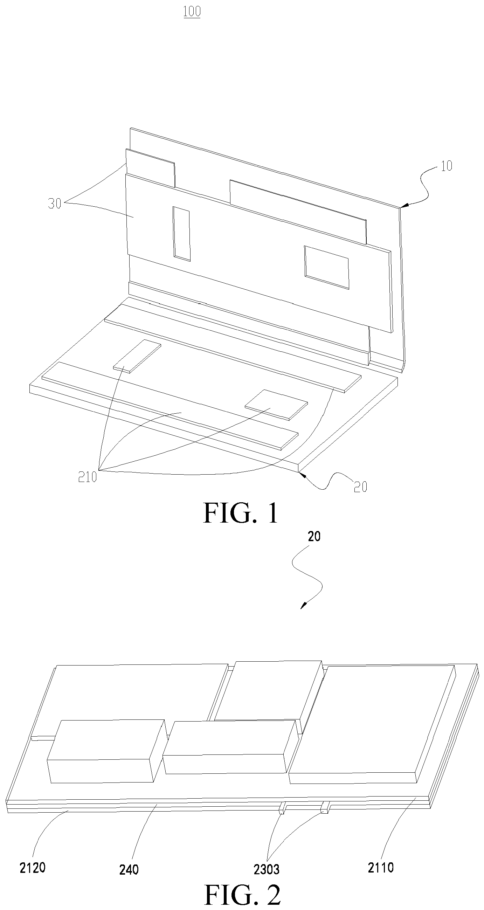

As shown in FIG. 1 and FIG. 2, the electronic device 100 includes an enclosure 10, a battery 20, and a functional device 30. The enclosure 10 has accommodating space 110 formed therein, which is configured to accommodate the battery 20 and the functional device 30.

The enclosure 10 is generally arranged in a regular shape, for example, the enclosure 10 is substantially rectangular in shape. Correspondingly, the accommodating space inside the enclosure 10 is also substantially a regular shape, for example, the accommodating space is also rectangular, and the specific embodiments thereof are not limited in detail here. In practice, the enclosure 10 and the accommodating space 110 inside the housing are usually regular shapes. Meanwhile, the electronic device 100 generally needs to include various types of functional devices 30 having different specifications and shapes. After these functional devices 30 are accommodated in the accommodating space 110, the space occupied together is correspondingly irregular. Generally, the enclosure 10 is provided with an independent battery compartment, and the battery compartment is arranged in a regular shape to facilitate design and processing. The battery compartment needs to avoid the functional device 30 as a whole, resulting in unavailability of a number of irregular spaces.

Based on the above, in the electronic device 100 disclosed in the present disclosure, the functional device 30 is mounted to the enclosure 10 and occupies a part of the accommodating space 110, and the battery 20 substantially occupies the rest of the accommodating space 110. It should be noted that the "substantially" here means that the foregoing remaining space cannot be strictly occupied due to a factor such as a machining accuracy limitation, an assembly requirement, and an electrical safety requirement. Therefore, the battery 20 can generally occupy the rest of the accommodating space 110, and can reflect that the battery 20 and the functional device 30 avoid each other and complement each other in volume to use a volume of the accommodating space 110 as much as possible.

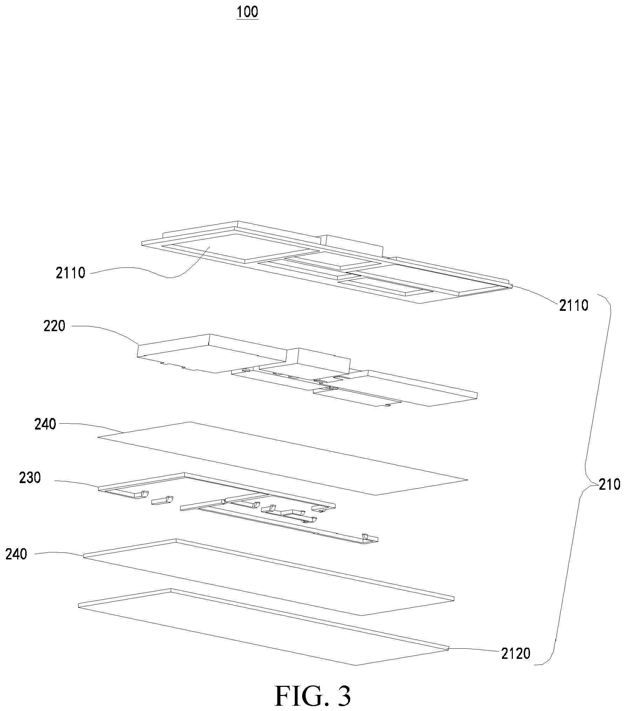

In addition, as shown in FIG. 3 to FIG. 5, in order to achieve the above object, the battery 20 disclosed in the embodiment of the present disclosure includes a housing 210, multiple electrode cores 220, and a connection circuit 230.

The multiple electrode cores 220 have predetermined overall dimensions and are arranged according to predetermined positions respectively. In a specific implementation, the electronic device 100 needs to implement a specific function, and the functional device 30 may be arranged in the enclosure 10 prior to the battery 20. Correspondingly, the shape and distribution of the remaining space within the enclosure 10 are also substantially determined. In this way, overall dimensions and positions of the multiple electrode cores 220 can be divided in advance according to the shape and distribution of the remaining space. Meanwhile, in order to meet the demand that the battery 20 can output power to the outside, the series and/or parallel relationship between the multiple electrode cores 220 can be preset to set an output current, voltage, and the like.

At least two of the electrode cores 220 have different heights, which can be set according to the volume occupation of the functional device 30. In this way, each of the electrode cores 220 may be arranged in a mutual avoidance relationship with the multiple functional devices 30. That is to say, when the battery 20 is placed in the accommodating space 110, the functional device 30 of the electronic device 100 occupies a part of the accommodating space 110. For the battery 20, the overall dimension and the position arrangement of the electrode core 220 is preset according to the arrangement of the functional device 30, and the electrode core 220 is set to a height that matches the corresponding position of the functional device 30. As a result, the battery 20 substantially occupies the rest of the accommodating space 110, and realizes the full utilization of the accommodating space 110.

The predetermined position of the electrode core 220 is provided with a lead-out portion 2201, so as to realize the series and parallel connection between the multiple electrode cores 220.

The predetermined position of the housing 210 protrudes outward, and multiple accommodating grooves 2101 are correspondingly formed inside the housing 210. The multiple accommodating grooves 2101 match the multiple electrode cores 220 in the overall dimensions, so as to correspondingly accommodate the multiple electrode cores 220.

The connection circuit 230 is accommodated in the housing 210 and laid based on a predetermined serial/parallel relationship of the multiple electrode cores 220 and a position of the lead-out portion 2201 to electrically connect the multiple electrode cores 220. The connection circuit 230 further includes an output terminal 2303. The output terminal 2303 extends out of the housing 210 for leading out power of the battery 20.

The connection circuit 230 is accommodated in the housing and laid based on a predetermined serial/parallel relationship of the multiple electrode cores 220 and a position of the lead-out portion 2201 to electrically connect the multiple electrode cores. Wires are arranged in the housing 210 of the battery 20, and the electrical connection of the electrode core 220 is realized. The output terminal extends out of the housing for electrical lead-out, which can simplify an external circuit and reduce occupation of an internal space of the electronic device 100 by an external circuit and a component.

In a preferred implementation, the connection circuit further includes a wire portion 2301 and multiple connecting portions 2302 arranged on the wire portion 2301. The wire portion 2301 is laid on a circumferential side of the electrode core 220 based on the predetermined serial/parallel relationship of the multiple electrode cores 220 and the position of the lead-out portion 2201. The multiple connecting portions 2302 are arranged on the wire portion 2301 and electrically connected with the lead-out portion 2201 at a corresponding position. The output terminal 2303 is arranged on the wire portion 2301.

During specific implementation, the electrode core 220 may be made by winding a positive plate, a separator, and a negative plate. A tab is reserved on the positive plate and the negative plate. Accordingly, the lead-out portion 2201 may correspondingly include a positive lead-out portion and a negative lead-out portion that are formed after the winding by respectively soldering the positive tabs together and soldering the negative tabs together. The lead-out portion 2201 may be arranged on a side surface of the electrode core 220, and the lead-out portion 2201 of the multiple electrode cores 220 may be substantially arranged on a same plane, to facilitate arrangement of the connection circuit 230.

The wire portion 2301 may include multiple wire sections predetermined according to the predetermined serial/parallel relationship and the position of the lead-out portion. Since the multiple electrode cores 220 are different in size and specification to meet the requirements of space occupation, in order to meet the requirement for output power, the electrode cores need to be connected according to the predetermined series and parallel relationship. The wire portion 2301 is preset as multiple wire sections, which can more conveniently complete the predetermined serial/parallel connection, especially the series connection, according to the arrangement of the electrode core 220.

To facilitate processing and molding, and to simplify the connection step, at least one of the connecting portion 2302 and the output terminal 2303 may be integrally preformed with one of the wire sections. During specific implementation, the connecting portion 2302 can be integrally formed with the corresponding wire section, and the connecting portion 2302 is located at a terminal of the corresponding wire section. The output terminal 2303 includes a positive output terminal and a negative output terminal, one of which is integrally formed with a wire section, and the other may be formed by a wire section. An outer side of the wire portion is covered with an insulating film 240, to achieve an electrical insulation protection. A part of the connecting portion 2302 and the output terminal 2303 are exposed to facilitate electrical connection.

A spacing may be defined between adjacent electrode cores 220 as setting the arrangement of the multiple electrode cores 220. The lead-out portion 2201 of each electrode core 220 needs to be connected with the connection circuit 230, and is arranged toward the spacing accordingly. A part of the wire portion 2301 located between adjacent electrode cores 220 is embedded in a corresponding spacing. In this arrangement, the electrical connection between the connection circuit 230 and the lead-out portion 2201 of the electrode core 220 is facilitated. Besides, the lead-out portion 2201 of the electrode core 220 needs to occupy part of the space, therefore, the wire portion 2301 of the connection circuit 230 is embedded in the spacing that needs to be reserved, which is equivalent to multiplexing this part of the space. As a result, the space utilization rate is improved and the wiring is facilitated.

During specific implementation, the housing 210 may include a first packaging film 2110 and a second packaging film 2120.

The first packaging film 2110 is substantially located in the same plane, that is, the first packaging film 2110 is substantially a flat film, forming a flat side of the housing 210. During specific implementation, the "substantially" here can be used for a tolerance and an error caused by an impact of machining accuracy, or a local special shape introduced due to a local design requirement, and the like. In all, the first packaging film 2110 is generally flat.

A predetermined position of the second packaging film 2120 is recessed away from the first packaging film 2110 to form the multiple accommodating grooves 2101. A shape of each accommodating groove 2101 matches the corresponding electrode core 220.

Circumferential sides of the first packaging film 2110 and the second packaging film 2120 are respectively provided an edge sealing portion. The circumferential sides of the first packaging film 2110 and the second packaging film 2120 is sealed and connected through the edge sealing portion, so that the electrode core 220 and the connection circuit 230 are packaged in the enclosure 210. An outer side of the output terminal 2303 is covered with a sealant layer (not shown in the figure). The output terminal 2303 extends out of the housing 210 from the two edge sealing portions; and the output terminal 2303 is hermetically connected to a corresponding position of the edge sealing portion through the sealant layer for leading out power of the battery 20.

The lead-out portion 2201 of the electrode core 220 and the connection circuit 230 are arranged close to the first packaging film 2110. Neat wiring can be formed by using the flat first packaging film 2110, and late stress deformation can be avoided as much as possible.

As an example, as shown in FIG. 3, in a specific embodiment, the battery 20 includes five electrode cores 220, which are specifically referred to as a first electrode core 2210, a second electrode core 2220, a third electrode core 2230, a fourth electrode core 2240, and a fifth electrode core 2250. These electrode cores 220 are rectangular in shape, and each electrode core has three dimensions: length, width, and height. The width and length are respectively the dimensions of the electrode core in two directions perpendicular to the height direction. As described above, at least two of the five electrode cores 220 have different heights. During specific implementation, the functional devices 30 in the electronic device 100 have different specifications, therefore, the five electrode cores 220 have different heights generally, and at least two electrode cores 220 have different widths, and/or at least two electrode cores 220 have different lengths among the five electrode cores 220. In this example, the length, width, and height of the first electrode core to the fifth electrode core are different from each other. The implementation may be set according to a specific requirement.

The first electrode core 2210, the second electrode core 2220, the third electrode core 2230, the fourth electrode core 2240, and the fifth electrode core 2250 are arranged in a predetermined form, and a spacing is defined between the adjacent electrode cores. The lead-out portion 2201 of each electrode core 220 needs to be connected with the connection circuit 230, and is arranged toward the spacing accordingly. As shown in FIG. 3, the positive lead-out portion and the negative lead-out portion of the second electrode core 2220 are arranged in a spacing between the second electrode core 2220 and the third electrode core 2230. The positive lead-out portion and the negative lead-out portion of the second electrode core 2220 are arranged in a spacing between the second electrode core 2220 and the third electrode core 2230. The positive lead-out portion and the negative lead-out portion of the third electrode core 2230 are arranged in a spacing between the third electrode core 2230 and the fifth electrode core 2250. The positive lead-out portion of the fourth electrode core 2240 and the fifth electrode core 2250 are arranged in a spacing between the fourth electrode core 2240 and the fifth electrode core 2250. The negative lead-out portion of the fifth electrode core 2250 is arranged in a spacing between the fifth electrode core 2250 and the first electrode core 2210. The positive lead-out portion of the first electrode core 2210, the negative lead-out portion, and the negative lead-out portion of the fourth electrode core 2240 are arranged toward an outer circumferential side of the respective electrode cores.

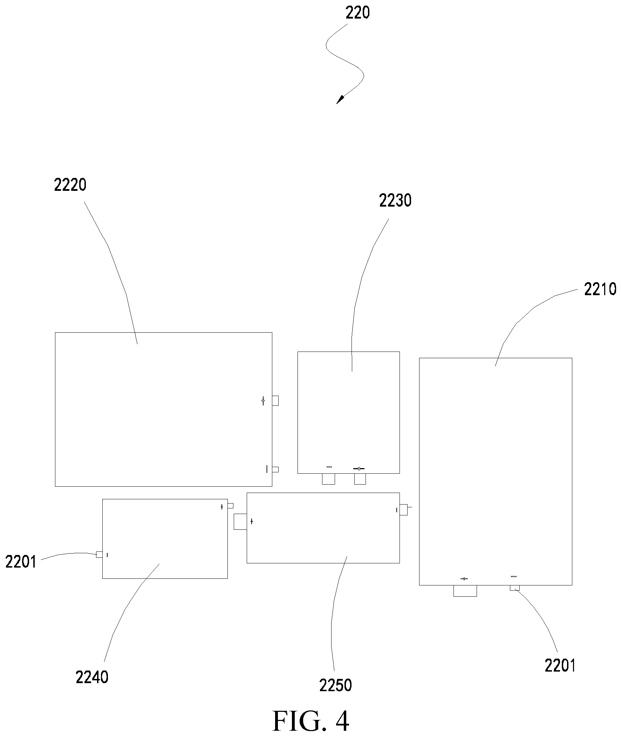

Accordingly, in order to achieve a predetermined series-parallel relationship between the first electrode core to the fifth electrode core, multiple wire sections are arranged on the wire portion 2301 of the connection circuit 230. For example, as shown in FIG. 4, when it is necessary to realize that the first electrode core 2210 is connected in series with the second electrode core 2220 and the third electrode core 2230 after being connected in parallel, and then connected in series with the fourth electrode core 2240 and the fifth electrode core 2250, the wire portion 2301 can be arranged into four sections, that is, a first wire section 2310, a second wire section 2320, a third wire section 2330, and a fourth wire section 2340.

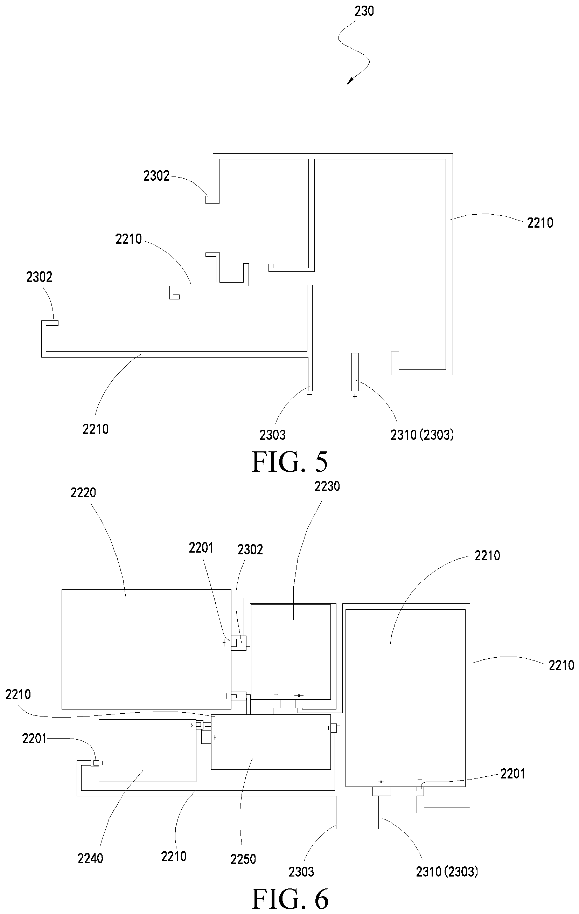

As shown in FIG. 5, the first wire section 2310 is connected with the positive lead-out portion of the first electrode core 2210, and is multiplexed as the positive electrode output terminal of the battery 20.

One end of the second wire section 2320 is connected with the negative lead-out portion of the first electrode core 2210, and the other end separates two connecting portions 2302, which are respectively connected with the positive lead-out portions of the second electrode core 2220 and the third electrode core 2230.

Both ends of the third wire section 2330 are each divided into two connecting portions 2302. The two connecting portions 2302 at one end are respectively connected with the negative lead-out portion of the second electrode core 2220 and the negative lead-out portion of the fifth electrode core 2250, the two connecting portions 2302 at the other end are respectively connected with the positive lead-out portion of the fourth electrode core 2240 and the positive lead-out portion of the fifth electrode core 2250.

One end of the fourth wire section 2340 is divided into two connecting portions 2320, which are respectively connected with the negative lead-out portion of the fourth electrode core 2240 and the negative lead-out portion of the fifth electrode core 2250, the other end is multiplexed as the negative output terminal of the battery 20.

Through the arrangement and the connection of the wire section, the first electrode core 2210, the second electrode core 2220 and the third electrode core 2230 after being connected in parallel, and the series connection of the fourth electrode core 2240 and the fifth electrode core 2250 after being connected in parallel can be realized, and the positive output and the negative output of the battery 20 may be realized at the same time.

In the description of this specification, the description of the reference terms such as "an embodiment", "some embodiments", "exemplary embodiments", "example", "specific example", or "some examples" means that the specific features, structures, materials, or characteristics described with reference to the embodiment or example are included in at least one embodiment or example of the present disclosure. In the present disclosure, exemplary descriptions of the foregoing terms do not necessarily refer to the same embodiment or example.

Although the embodiments of the present disclosure have been shown and described, a person of ordinary skill in the art should understand that various changes, modifications, replacements, and variations may be made to the embodiments without departing from the principles and spirit of the present disclosure, and the scope of the present disclosure is as defined by the appended claims and their equivalents.

## Claims

1. A battery, comprising:
a plurality of electrode cores, the electrode cores each having a predetermined overall dimension and being arranged based on predetermined positions; at least two of the electrode cores having different heights; and a predetermined position of the electrode core being provided with a lead-out portion;
a housing, having a predetermined position protruding outward and forming inside a plurality of accommodating grooves correspondingly; the plurality of accommodating grooves matching the overall dimensions of the plurality of electrode cores to correspondingly accommodate the plurality of electrode cores; and
a connection circuit, accommodated in the housing and laid based on a predetermined serial/parallel relationship of the plurality of electrode cores and a position of the lead-out portion to electrically connect the plurality of electrode cores; the connection circuit comprising an output terminal; and the output terminal extending out of the housing for leading out power.

2. The battery according to claim 1, wherein the connection circuit further comprises:
a wire portion, laid on a circumferential side of the electrode core based on the predetermined serial/parallel relationship of the plurality of electrode cores and the position of the lead-out portion; and
a plurality of connecting portions, arranged on the wire portion and electrically connected with the lead-out portion at a corresponding position, wherein
the output terminal is arranged on the wire portion.

3. The battery according to claim 2, wherein the wire portion comprises a plurality of wire sections predetermined based on the predetermined serial/parallel relationship and the position of the lead-out portion; and
at least one of the connecting portion and the output terminal is integrally preformed with one of the wire sections.

4. The battery according to claim 2 or 3, wherein a spacing is defined between adjacent electrode cores; and a part of the wire portion located between adjacent electrode cores is embedded in a corresponding spacing.

5. The battery according to any of claims 1 to 4, wherein the housing comprises:
a first packaging film, substantially located in a same plane; and
a second packaging film, wherein a predetermined position of the second packaging film is recessed away from the first packaging film to form the plurality of accommodating grooves.

6. The battery according to claim 5, wherein the lead-out portion of the electrode core and the connection circuit are arranged close to the first packaging film.

7. The battery according to claim 5 or 6, wherein circumferential sides of the first packaging film and the second packaging film are respectively provided with an edge sealing portion; an outer side of the output terminal is covered with a sealant layer;
the circumferential sides of the first packaging film and the second packaging film are sealed and connected through the edge sealing portions; the output terminal extends out of the housing from the two edge sealing portions, and the output terminal is hermetically connected with a corresponding position of the edge sealing portion through the sealant layer.

8. The battery according to any of claims 2 to 7, wherein an outer side of the wire portion is covered with an insulating film.

9. The battery according to any of claims 1 to 8, wherein at least two of the plurality of electrode cores have different widths and/or have different lengths; and
the widths and the lengths are respectively dimensions of the electrode cores in two directions perpendicular to a height direction.

10. An electronic device, comprising:
an enclosure, having accommodating space formed therein; and
a plurality of functional devices, mounted to the enclosure and occupying a part of the accommodating space,
wherein the electronic device further comprises the battery according to any of claims 1 to 9; and
the battery substantially occupies the rest of the accommodating space.
